# EUROPEAN PATENT SPECIFICATION

(11) **EP 2 746 882 B1**
(45) Date of publication and mention of the grant of the patent: **05.09.2018**
(21) Application number: 12008509.7
(22) Date of filing: 21.12.2012
(51) Int. Cl.: G05B 23/02

(54) **Conveying system of a machine**
Fördersystem einer Maschine
Système de transport d'une machine

(43) Date of publication of application: 25.06.2014
(73) Proprietor: ROBERT BOSCH GMBH, 70442 Stuttgart (DE)
(72) Inventor: Hibbs, Richard, NL-5731JV Mierlo (NL)
(74) Representative: Wiesmann, Stephan

(56) References cited:
- EP-A1- 2 439 773
- US-A1- 2002 096 417
- US-A1- 2008 308 356
- US-B1- 6 183 615
- US-B1- 6 591 162

## Description

The present invention relates to a conveying system of a machine in which it is in particular possible to uniquely identify a carrier conveyed by the conveying system.

In machines for producing an article, conveying systems are used to convey parts, tools, etc., which are usable for the production of the article, to different stations of the machine. Such a machine is described, for example, in US 2004/0049308 A1 which discloses an assembly for processing substrates, in which a conveying device for moving the substrates from a vacuum lock to a process chamber is provided.

In such machines for producing an article, carriers are conveyable by the use of magnetic force. The magnetic force can be produced by coils fixedly arranged in one or more tracks along which the carriers travel. Therewith, it is possible to convey each carrier with a velocity specific to the single carrier.

Currently, the number of carriers that can be used in a single conveying system as described above lies between 0 and 32. If there is no way that a control system of the conveying system is able to uniquely identify a specific carrier of the plurality of carriers present in the conveying system,this is a disadvantage because the carriers travel different distances during an operation of the conveying system. Due to this, it is not easy to predict when it will be necessary to service or replace bearings of a carrier. In addition, for certain products, it is required to trace which one of the carriers has been used in the production process of the product. In case the individual carriers are not traceable in the conveying system, the conveying system is not usable for the production of such a product. This limits considerably the usability of the above-described conveying system.

US 6, 183,615 B1 relates to a transport system for a wafer processing line in which a minimum risk of contamination from particels and a maximized wafer throughput shall be achieved.

EP 2 439 773 A1 discloses a conveying system in which a plurality of carriers is attached to an endless belt configured to rotate in a circulating manner.

US 2002/096417 A1 describes a positive displacement sorter apparatus, wherein a plurality of slats is interconnected in an endless web. A linear motor is provided to propel the web. The web conveys articles by the use of the interconnected slats. The relative position of the slats with respect to each other is fixed.

US 6 591 162 B1 relates to a load port assembly having a carrier identification reader and being capable of monitoring a plurality of performance characteristics of wafer carriers. Actual performance values of carriers are compared to average values in order to identify carriers which are performing outside of acceptable ranges.

It has been conceived, to make use of a carrier specific correction table (CPA-table) to improve the positioning accuracy of each individual carrier in the conveying system. However, the use of such a CPA-table is problematic, since the user is responsible that each carrier is assigned the correct CPA-table. The danger of a user making a mistake when assigning a CPA-table to a carrier is disadvantageous.

Therefore, it is an object of the present invention to provide a conveying system of a machine to solve the above-mentioned problems. In particular, a conveying system shall be provided with which the range for using the conveying system is broadened and the operation and maintenance of the conveying system is made easier and less error prone for a user.

This object is solved by a conveying system according to claim 1.

With the conveying system it is possible to automatically assign a correct carrier specific correction table (CPA-table) to each carrier of the conveying system. Therewith, the burden for a user is reduced and the assignment error no longer exists. The carrier specific correction tables can improve the positioning accuracy of each individual carrier, since positioning correction values valid for the individual carrier are stored in the CPA-tables.

It is further possible to keep track of maintenance requirements for each carrier based on the usage thereof, for example the maintenance intervals of bearings of the carrier.

In addition, it is possible to collect and store traceability or tracing data usable for recording which carrier was used in the production process of a certain product. Therewith, the conveying system can also be used in applications in which such a tracing is required.

A further advantage of the above-described control device lies in that carrier specific production settings can be used. Therewith, it becomes possible to perform different production steps for different carriers. This allows for a flexible production line being able to automatically produce different products in the same production run.

Advantageously, a control device is also able to perform a carrier routing based on the result of uniquely identifying the carrier conveyed by the conveying system.

Further advantageous developments of the control device are set out in the dependent claims.

It is possible, that each driving device comprises a receiving unit for receiving the carrier specific data, the receiving unit being connected with a control device for controlling the conveying system.

It is further possible, that each carrier is provided with a transmitting unit of the carrier tracing device.

Advantageously, the transmitting unit is a RFID-tag and the receiving unit is an RFID-receiver, or the transmitting unit is a code and the receiving unit is a code reader.

The conveying system can further comprise a shielding device for shielding the carrier tracing device against the magnetic field produced by the at least one driving devices.

Preferably, the shielding device is arranged for shielding the transmitting unit against the magnetic field produced by the at least one driving devices.

Further possible implementations of the invention also comprise combinations of specific features described above or in the following as regards the embodiments, even if the combinations of specific features are not explicitly mentioned. Therefore, the person skilled in the art will also add single aspects as improvements or supplements to the basic form of the invention.

In the following, the present invention is described in more detail with the help of embodiments by reference to the appended drawings. The figures thereof show:
Fig. 1 a schematic side view of a machine comprising a conveying system with a control device according to a first embodiment, useful for a better understanding of the invention;
Fig. 2 a schematic block diagram of the control device according to the first embodiment;
Fig. 3 a flow chart schematically illustrating a control method according to the first embodiment;
Fig. 4 a schematic block diagram of the control device according to a second embodiment, useful for a better understanding of the invention; and
Fig. 5 a schematic side view of a machine comprising a conveying system with a control device according to a third embodiment in accordance with the invention.

In the figures, similar elements or elements having similar function are marked with the same reference signs unless specified otherwise.

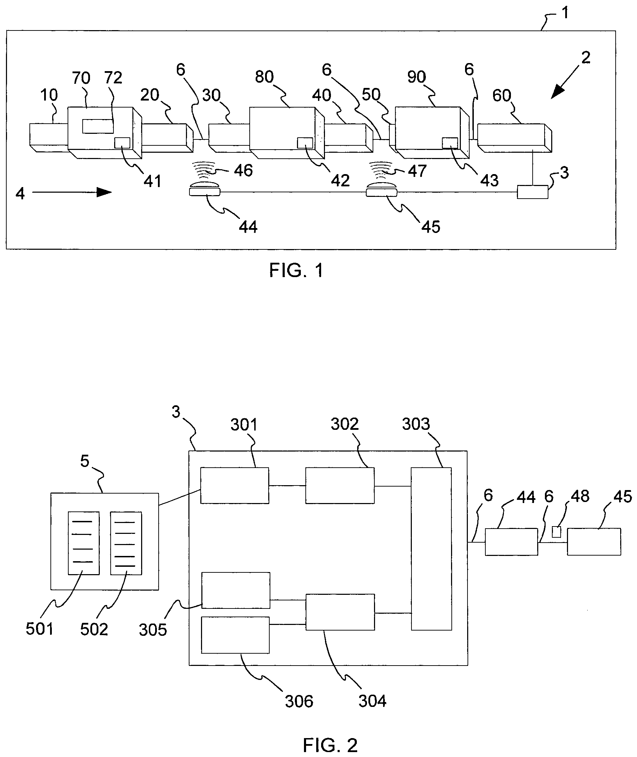

Fig. 1 shows a machine 1 for producing an article. The machine 1 comprises a conveying system 2 being controlled by a control device 3 and having a carrier tracing device 4. The conveying system 2 comprises a first driving device 10, a second driving device 20, a third driving device 30, a fourth driving device 40, a fifth driving device 50, a sixth driving device 60, a first carrier 70, carrying a load 72, like an article to be produced by the machine 1, etc., a second carrier 80, and a third carrier 90. The first to third carriers 70, 80, 90 are movable in the conveying system 2 by magnetic force created by the first to sixth driving devices 10, 20, 30, 40, 50, 60 and controlled by the control device 3. The first to sixth driving devices 10, 20, 30, 40, 50, 60 build up a track of the conveying system 2. The carriers 70, 80, 90 are movable over the track of the conveying system 2 from a first position to a second position different from the first position. For example, the first position is the position on the left side of the conveying system 2 in Fig. 1, where the first driving device 10 is arranged in Fig. 1. The second position could then be the position of the sixth driving device 60, i.e. a position on the right side in Fig. 1.

In the present embodiment, the first to third carriers 70, 80, 90 are provided with magnetic elements (not shown) for cooperating with the first to sixth coils 10, 20, 30, 40, 50, 60, the magnetic force being created by a control performed by the control device 3. Therewith, the first to third carriers 70, 80, 90 can be moved in the conveying system 2 individually or together.

In Fig. 1, the carrier tracing device 4 comprises a first transmitting unit 41, a second transmitting unit 42, a third transmitting unit 43, a first receiving unit 44, and a second receiving unit 45. The first receiving unit 45 is able to receive a signal transmitted from one of the transmitting units 41, 42, 43. This is indicated by an area 46 in Fig. 1. The second receiving unit 45 is, similar to the first receiving unit 44, able to receive a signal transmitted from one of the transmitting units 41, 42, 43. This is indicated by an area 47 in Fig. 1. The transmitting units 41, 42, 43 are in this embodiment a RFID-tag. The receiving units 44, 45 are in this embodiment a RFID-receiver. Herein, the abbreviation RFID signifies a Radio- Frequency Identification Device capable to perform an identification by the use of electromagnetic waves.

In Fig. 1, the receiving units 44, 45 are arranged in the machine 1 and the conveying system 2 such that the receiving units 44, 45 can receive the signals sent by the transmitting units 41, 42, 43. Thus, the areas 46, 47 are faced to the track along which the first to third carriers 70, 80, 90 travel at which carriers the transmitting units 41, 42, 43 are arranged.

In this way, signals can be exchanged wirelessly between the transmitting units 41, 42, 43 and the receiving units 44, 45. Thus, information included in the signals can be transmitted from the transmitting units 41, 42, 43 to the receiving unit 44, 45, in which area 46, 47 the transmitting unit 41, 42, 43 is arranged.

Fig. 2 shows the configuration of the control device 3 in more detail. The control device 3 comprises a determining unit 301, and assigning unit 302, a communication unit 303, an evaluating unit 304, a routing unit 305, and a tracing unit 306. The determining unit 301 can access a storing device 5 in which a plurality of carrier specific correction tables 501, 502 are stored. The carrier specific correction tables 501, 502 are also referred to as CPA-table 501, 502 in the following. The communication unit 303 is connected via a communication line 6 with the receiving units 44, 45. Signals, and thus information received by the receiving units 44, 45, are/is sent by the use of the communication line 6 to the communication unit 303. In particular, carrier specific data 48 transmitted by the transmitting units 41, 42, 43 and received by the receiving unit 44, 45 is sent over the communication line 6 to the communication unit 303. The carrier specific data 48 can comprise a carrier identification number, also called carrier-ID, usage data and/or position data of the specific carrier, etc.

The determining unit 301 in Fig. 2 can additionally determine which CPA-table 501, 502 belongs to a specific carrier of the carriers 70, 80, 90. The carrier specific correction tables 501, 502 can improve the positioning accuracy of each individual carrier, since positioning correction values valid for the individual carrier are stored in the CPA-tables 501, 502. Based on the result of a determination made by the determining unit 301, the assigning unit 302 can assign the determined CPA-table 501, 502 to the specific carrier of the carriers 70, 80, 90. Alternatively, the determining unit 301 can determine on the basis of the carrier specific data 48 received in the communication unit 303 which CPA-table 501, 502 is sent from the transmitting units 41, 42, 43. Then, the assigning unit 302 can assign the determined CPA-table 501, 502 to the specific carrier of the carriers 70, 80, 90 in the storage unit 5. Thus, a user of the conveying system 2 and/or the machine 1 is not required to find out the correct CPA-table 501, 502 for each of the carriers 70, 80, 90. Instead, the control device 3 finds out the correct CPA-table 501, 502 automatically.

In Fig. 2, the evaluating unit 304 evaluates information received from the carrier tracing device 4, in particular the receiving units 44, 45. The information is sent by the receiving units 44, 45 over communication lines 6 to the communication unit 303 of the control device 3. The communication unit 303 can forward the signals received via the communication lines 6 to the evaluating unit 304 and receive information from the assign unit 302.

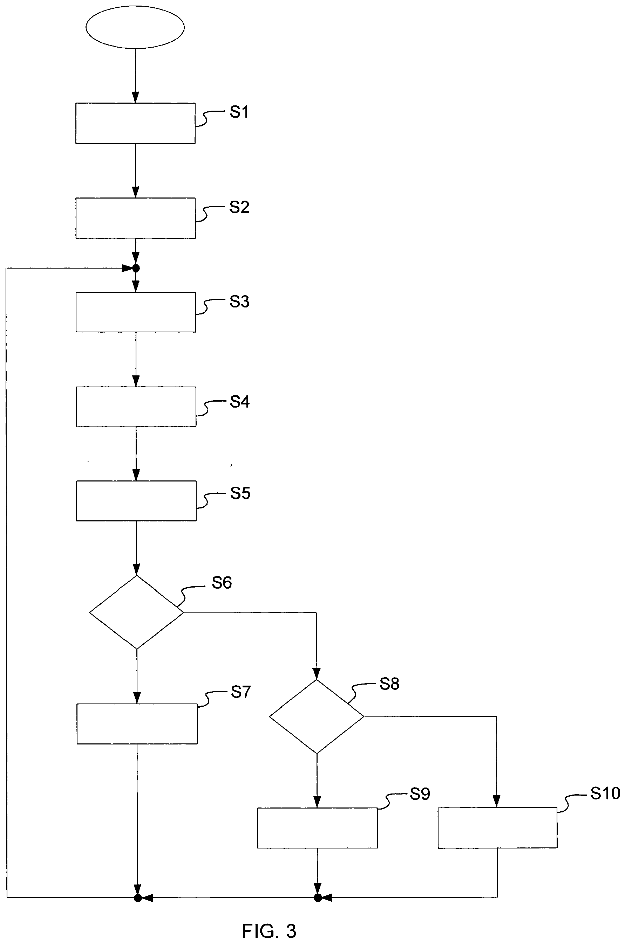

Fig. 3 shows a control method which can be performed by the control device 3 for controlling the conveying system 2 of the machine 1.

After a start of the control method, in a step S1, the determining unit 301 determines a carrier specific correction table 501, 502 for each of the carriers 70, 80, 90. Herein, the determining unit determines the carrier specific correction table 501, 502 on the basis of the parts building up the specific carrier, for example. The carrier specific correction table 501, 502 includes, thus, carrier specific data which comprise information concerning the maintenance intervals necessary for the bearings used in the carrier, for example. Alternatively, the determining unit 301 can determine on the basis of the carrier specific data 48 received in the communication unit 303 which CPA-table 501, 502 is sent from the transmitting units 41, 42, 43. Thereafter the flow goes further to a step S2.

In the step S2, the assigning unit 302 assigns the carrier specific correction table 501, 502 which is determined by the determining unit 301 to the specific carrier of the carriers 70, 80, 90. Therewith, the determined carrier specific correction table 501, 502 is stored in a storing unit of the concerned transmitting unit 41, 42, 43 of the specific carrier 70, 80, 90. In case the first carrier 70 is the specific carrier, the carrier specific correction table 501 or 502 is stored in the transmitting unit 41. As an alternative, the assigning unit 302 can assign the determined CPA-table 501, 502 to the specific carrier of the carriers 70, 80, 90 in the storage unit 5. Thereafter, the flow goes further to a step S3.

In the step S3, the transmitting units 41, 42, 43 transmit carrier specific data 48 of the corresponding carriers 70, 80, 90 to the concerned receiving unit of the receiving units 44, 45. According to the RFID technique, the transmitting units 41, 42, 43 will only transmit or send the carrier specific data 48 when the transmitting units 41, 42, 43 are arranged in an electromagnetic alternating field created by one of the receiving units 44, 45. Thereafter, the flow goes further to a step S4.

In the step S4, the concerned receiving unit 44, 45 wirelessly receives the data 48 sent by the corresponding transmitting unit of the transmitting units 41, 42, 43. The receiving units 44, 45 will forward the received carrier specific data 48 in the form of a signal via the communication line 6 to the communication unit 303 of the control device 3. Thereafter, the flow goes further to a step S5.

In the step S5, the evaluation unit 304 will evaluate the data 48 forwarded by the communication unit 303 for each of the carriers 70, 80, 90. Thereafter, the flow goes further to a step S6.

In the step S6, the evaluation unit 304 checks, whether the carrier specific data 48 transmitted by a transmitting unit of the transmitting units 41, 42, 43 indicate that the maintenance interval for the concerned carrier of the carriers 70, 80, 90 is reached. For this check, usage data and/or position data should be present in the carrier specific data 48. The position data could be information about the track in which the carrier is arranged, for example. In case the maintenance interval is reached, the flow goes further to a step S7. Otherwise, the flow goes further to a step S8.

In the step S7, a necessary maintenance of the concerned carrier of the carriers 70, 80, 90 is performed. However, it is not necessary to perform the maintenance before the concerned carrier of the carriers 70, 80, 90 can be used again. In the step S7, the control device 3 can thus also only report to the user/operator that a carrier of the carriers 70, 80, 90 is in need of maintenance and that it is up to the user to decide whether or not this is actually done. In this case, the maintenance information is kept by the control device 3 and will be updated every time a specific carrier 70, 80, 90 passes a receiving device 44, 45. Thereafter, the flow goes back to the step S3.

In the step S8, the evaluation unit 304 checks whether or not the carrier specific data 48 should be used for routing at least one of the carriers 70, 80, 90. In case the carrier specific data 48 should be used for routing, the flow goes further to a step S9. Otherwise, the flow goes further to a step S10.

In the step S9, the routing unit 305 routs the carriers 70, 80, 90 according to the carrier specific data 48 received. Herein, it is possible to choose a certain route for certain carriers of the carriers 70, 80, 90 as required. For example, it becomes possible to produce different products by using a different route for different carriers 70, 80, 90. Herein, "a different route" means a physically different route, e.g. two parallel tracks of which one is used to produce product A and the other one to produce product B. According to another example, it becomes possible to produce different products by skipping/modifying production steps for different carriers 70, 80, 90. In such a situation, all carriers 70, 80, 90 follow the same physical route, what means that they all pass the same production stations, but some carriers of the carriers 70, 80, 90 may skip certain production steps or the production steps at the individual production stations may differ based on the carrier ID. Thus, the machine 1 becomes a flexible production line that is able to automatically produce different products in the same production run. Thereafter, the flow goes back to the step S3.

In the step S10, the tracing unit 306 can use the carrier specific data 48 received by the communication unit 303 to trace the carriers 70, 80, 90 in the production process performed by the machine 1. For example, the tracing unit 306 can update predetermined data stored as for the process performed with the specific carrier since the last time the carrier specific data 48 was received by the communication unit 303. Thus, it can be found out which carrier of the carriers 70, 80, 90 has been used in the production process of a certain product. Thereafter, the flow goes back to the step S3.

The control method is finished, when the conveying system 2 and/or the machine 1 is switched off.

With the machine 1, a carrier 70, 80, 90 conveyed by the conveying system 2 can be uniquely identified.

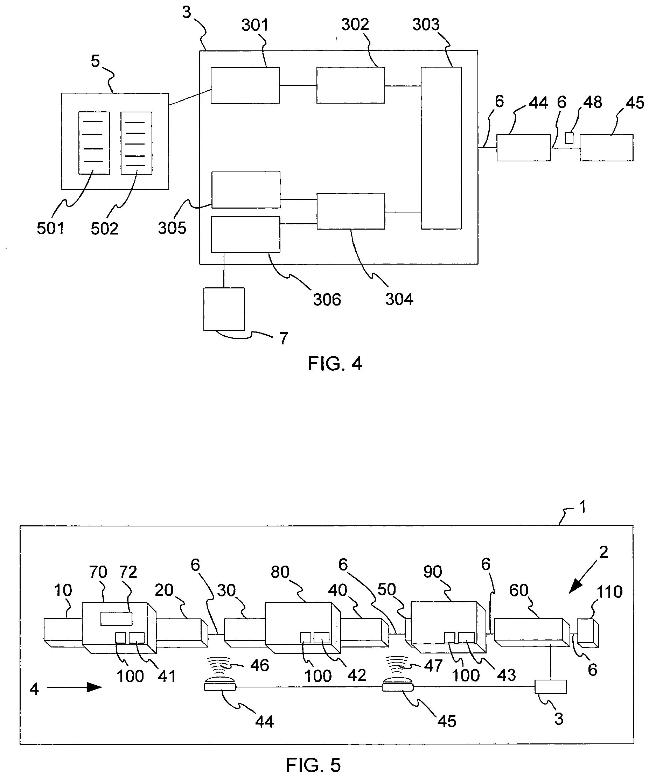

Fig. 4 shows a schematic block diagram of the control device according to a second embodiment, which control device is embedded in the conveying system 2.

In the present embodiment, the routing unit 305 can access run-time track layout change information 7 stored in a storing unit. The routing unit 305 can choose a certain route for certain carriers 70, 80, 90 by combining the signals sent by the carrier tracing device 4 with the run-time track layout change information 7 stored in the storing unit. All other configurations of the second embodiment are the same as described for the first embodiment.

Fig. 5 shows a schematic block diagram of the conveying system 2 according to a third embodiment in accordance with the invention. Herein, the transmitting units 41, 42, 43 each are shielded with one shielding device 100. The shielding devices 100 serve for shielding the carrier tracing device 4, in particular the transmitting units 41, 42, 43 against the magnetic field produced by the driving devices 10, 20, 30, 40, 50, 60. Therewith, a conflict between the magnetic field produced by the driving devices 10, 20, 30, 40, 50, 60 and the magnetic field produced by receiving units 44, 45 can be avoided. Preferably, the shielding devices 100 are formed from metal, like aluminum, copper, etc.

Further, the driving device 60 is provided with a magnetic sensor 110, for example two or three, etc. hall sensors, with which the position of the carriers 70, 80, 90 over the driving devices 10, 20, 30, 40, 50, 60 can be detected. The position data provided by the magnetic sensor 110 can then optionally be corrected with the data stored in a CPA-table 501, 502 to achieve a more accurate position. The other driving devices 10, 20, 30, 40, 50 can also be provided with a magnetic sensor 110 even if this is not shown in Fig. 5.

Thus, in the present embodiment, the evaluating unit 304 and/or the routing unit 305 and/or the tracing unit 306 can use the position data produced by the magnetic sensor 100. The position data can be compared with the carrier specific correction table 501, 502 assigned to the specific carrier of the carriers 70, 80, 90 to perform evaluating in the steps S5, S6, S8 and/or routing in the step S9, and or tracing in the step S10.

All other configurations of the third embodiment are the same as described for the first embodiment.

Therewith, a very flexible automated production line represented by the machine 1 of the first to third embodiments is provided.

Thus, the ability to uniquely identify each carrier of the carriers 70, 80, 90 in the first to third embodiments opens up a number of possibilities that make use of this ability.

All of the previously described implementation forms of the machine 1, the conveying system 2, the control means 3 and the control method can be used separately or in all possible combinations thereof. In particular, the features of the first and second embodiments can be combined arbitrarily. In addition, the following modifications are conceivable.

The elements shown in the drawings are shown schematically and can differ in the actual implementation form from the forms shown in the drawings whilst the above-described functions are ensured.

The driving devices 10, 20, 30, 40, 50, 60 can each be a coil or a motor producing a magnetic field causing the carriers 70, 80, 90 to move according to an cooperation of their magnetic elements with the magnetic field produced by the driving devices 10, 20, 30, 40, 50, 60. The number of the driving devices 10, 20, 30, 40, 50, 60 can be selected as desired. In addition, coils and/or motors can be present in one conveying system 2 or a track thereof.

The driving units 10, 20, 30, 40, 50, 60 can be provided with an integrated magnetic sensor 100, in particular hall sensors, for detecting whether one or more of the carriers 70, 80, 90 are arranged at the driving devices 10, 20, 30, 40, 50, 60. The receiving units 44, 45 can each be integrated in one of the driving units 10, 20, 30, 40, 50, 60 with the integrated hall sensor.

The carrier tracing device 4 is not limited to a RFID-device. Other devices in which the carriers can be identified uniquely by using transmitting units 41, 42, 43 and at least one receiving unit 44, 45 can be used instead. For example, the transmitting units 41, 42, 43 can be made up by a code, in particular, a bar code, a QR-code, etc. Thus, the receiving units 44, 45 can be the corresponding code reader, in particular, a barcode reader, a QR-code reader, etc.

The carrier tracing device 4 can be included into existing conveying systems 2 by adding one transmitting unit of the transmitting units 41, 42, 43 to each carrier 70, 80, 90 of the conveying system 2 and placing receiving units 44, 45 as required along a track of the conveying system 2.

The steps S1 and S2 can be performed when the conveying system 2 is put into operation. The steps S3 to S10 can be performed during the operation of the conveying system 2. It is not necessary that the control method performed by the control device 3 includes the steps S1 and/or S2. The steps S1 and/or S2 can even be performed by an offline system, which is not part of the conveying system 2 and which is able to determine the CPA table for a carrier 70, 80, 90. All the control device 3 needs to do is to link a specific table 501, 502 to a specific carrier 70, 80, 90.

It is not required that all of the steps S6 to S10 are performed with the control method and the control device 3. It is also possible to perform only one or two steps thereof.

The number of the tracks formed by the driving devices 10, 20, 30, 40, 50, 60 can be selected arbitrarily.

The shielding devices 100 are not obligatory and can be omitted in case the carrier tracing device 4 and/or the driving devices 10, 20, 30, 40, 50, 60 are configured such that no conflicts between the magnetic fields produced by these devices occur.

The dimensions shown in the drawings are used for illustrating the principle of the invention and are not limiting. The actual dimensions of the machine 1 and the components thereof can be selected as appropriate.

## Claims

1. Conveying System for conveying carriers (70, 80, 90) in a machine (1), comprising at least one carrier (70, 80, 90) for carrying a load (72), at least one driving device (10, 20, 30, 40, 50, 60) for driving the carriers (70, 80, 90) with magnetic force,
the at least one driving device (10, 20, 30, 40, 50, 60) provided with a magnetic sensor (110), with which the position of the carriers (70, 80, 90) can be detected,
and a carrier tracing device (4, 306) to uniquely identify a carrier (70, 80, 90) conveyed by the conveying system (2),
a control device (3) for controlling the conveying system (2) and for controlling the at least one driving device (10, 20, 30, 40, 50, 60), wherein the carrier tracing device (4, 306) comprises a transmitting unit (41, 42, 43) for transmitting carrier specific data (48) to the control device (3),
the control device (3) comprising an assigning unit (302) and a determining unit (301), the assigning unit (302) for assigning a carrier specific correction table (501, 502) determined by the determining unit (301) to a specific carrier (70, 80, 90) of said carriers (70, 80, 90), the determining unit (301) being for determining the carrier specific correction table (501, 502) for the specific carrier (70, 80, 90),
a storing device (5) in which a plurality of the carrier specific correction tables (501, 502) are stored, the carrier specific correction tables (501, 502) storing positioning correction values valid for an individual carrier of the carriers (70, 80, 90),
the determining unit (301) being configured to access the storing device (5), and
an evaluation unit (304) and/or a tracing unit (306) and/or a routing unit (305) of the control device (3) being configured to use a position data produced by the magnetic sensor (110), the position data being corrected with data stored in the carrier specific correction table (501, 502).

2. Conveying system (2) according to claim 1, wherein each driving device (10, 20, 30, 40, 50, 60) comprises a receiving unit (44, 45) for receiving the carrier specific data (48), the receiving unit (44, 45) being connected with the control device (3) for controlling the conveying system (2).

3. Conveying system (2) according to claims 1 or 2, wherein the carrier tracing device (4, 306) comprises a plurality of transmitting units (41, 42, 43), each carrier (70, 80, 90) being provided with a respective transmitting unit (41, 42, 43) of said transmitting units (41, 42, 43).

4. Conveying system (2) according to claims 2 or 3, wherein each transmitting unit (41, 42, 43) is a RFID-tag and the receiving unit (44, 45) is a RFID-receiver.

## Patentansprüche

1. Fördersystem zum Befördern von Trägern (70, 80, 90) in einer Maschine (1), umfassend mindestens einen Träger (70, 80, 90) zum Tragen einer Last (72), mindestens eine Antriebsvorrichtung (10, 20, 30, 40, 50, 60) zum Antreiben der Träger (70, 80, 90) mit Magnetkraft,
wobei die mindestens eine Antriebsvorrichtung (10, 20, 30, 40, 50, 60) mit einem Magnetsensor (110) versehen ist, mit dem die Position der Träger (70, 80, 90) detektiert werden kann,
und eine Trägerverfolgungsvorrichtung (4, 306) zum eindeutigen Identifizieren eines Trägers (70, 80, 90), der durch das Fördersystem (2) befördert wird,
eine Steuervorrichtung (3) zum Steuern des Fördersystems (2) und zum Steuern der mindestens einen Antriebsvorrichtung (10, 20, 30, 40, 50, 60), wobei die Trägerverfolgungsvorrichtung (4, 306) eine Übertragungseinheit (41, 42, 43) zum Übertragen von trägerspezifischen Daten (48) zu der Steuervorrichtung (3) umfasst,
die Steuervorrichtung (3) umfassend eine Zuweisungseinheit (302) und Bestimmungseinheit (301), die Zuweisungseinheit (302) zum Zuweisen einer trägerspezifischen Korrekturtabelle (501, 502), bestimmt durch die Bestimmungseinheit (301), an einen spezifischen Träger (70, 80, 90) der Träger (70, 80, 90), wobei die Bestimmungseinheit (301) zum Bestimmen der trägerspezifischen Korrekturtabelle (501, 502) für den spezifischen Träger (70, 80, 90) ist, eine Speichervorrichtung (5), in der eine Vielzahl der trägerspezifischen Korrekturtabellen (501, 502) gespeichert ist, wobei die trägerspezifischen Korrekturtabellen (501, 502) Positionskorrekturwerte speichern, die für einen einzelnen Träger der Träger (70, 80, 90) gültig sind,
wobei die Bestimmungseinheit (301) konfiguriert ist zum Zugreifen auf die Speichervorrichtung (5) und
eine Bewertungseinheit (304) und/oder eine Verfolgungseinheit (306) und/oder eine Leiteinheit (305) der Steuervorrichtung (3) konfiguriert ist zum Verwenden von durch den Magnetsensor (110) produzierten Positionsdaten, die Positionsdaten mit in der trägerspezifischen Korrekturtabelle (501, 502) gespeicherten Daten korrigiert werden.

2. Fördersystem (2) nach Anspruch 1, wobei jede Antriebsvorrichtung (10, 20, 30, 40, 50, 60) eine Empfangseinheit (44, 45) zum Empfangen der trägerspezifischen Daten (48) umfasst, die Empfangseinheit (44, 45) mit der Steuervorrichtung (3) zum Steuern des Fördersystems (2) verbunden ist.

3. Fördersystem (2) nach Anspruch 1 oder 2, wobei die Trägerverfolgungsvorrichtung (4, 306) eine Vielzahl von Übertragungseinheiten (41, 42, 43) umfasst, jeder Träger (70, 80, 90) mit einer jeweiligen Übertragungseinheit (41, 42, 43) der Übertragungseinheiten (41, 42, 43) versehen ist.

4. Fördersystem (2) nach Anspruch 2 oder 3, wobei jede Übertragungseinheit (41, 42, 43) eine RFID-Kennung ist und die Empfangseinheit (44, 45) ein RFID-Empfänger ist.

## Revendications

1. Système de transport pour transporter des chariots (70, 80, 90) dans une machine (1), comprenant au moins un chariot (70, 80, 90) pour porter une charge (72), au moins un dispositif d'entraînement (10, 20, 30, 40, 50, 60) pour entraîner les chariots (70, 80, 90) par force magnétique,
l'au moins un dispositif d'entraînement (10, 20, 30, 40, 50, 60) étant doté d'un capteur magnétique (110), avec lequel la position des chariots (70, 80, 90) peut être détectée,
et un dispositif suiveur de chariot (4, 306) pour identifier de manière unique un chariot (70, 80, 90) transporté par le système de transport (2),
un dispositif de commande (3) pour commander le système de transport (2) et pour commander l'au moins un dispositif d'entraînement (10, 20, 30, 40, 50, 60), dans lequel le dispositif suiveur de chariot (4, 306) comprend une unité de transmission (41, 42, 43) pour transmettre des données spécifiques au chariot (48) au dispositif de commande (3),
le dispositif de commande (3) comprenant une unité d'assignation (302) et une unité de détermination (301), l'unité d'assignation (302) servant à assigner une table de correction spécifique au chariot (501, 502) déterminée par l'unité de détermination (301) à un chariot spécifique (70, 80, 90) desdits chariots (70, 80, 90), l'unité de détermination (301) servant à déterminer la table de correction spécifique au chariot (501, 502) pour le chariot spécifique (70, 80, 90),
un dispositif de mémorisation (5) dans lequel une pluralité des tables de correction spécifiques aux chariots (501, 502) sont mémorisées, les tables de correction spécifiques aux chariots (501, 502) mémorisant des valeurs de correction de positionnement valables pour un chariot individuel des chariots (70, 80, 90),
l'unité de détermination (301) étant configurée pour accéder au dispositif de mémorisation (5), et
une unité d'évaluation (304) et/ou une unité de suivi (306) et/ou une unité de routage (305) du dispositif de commande (3) étant configurées pour utiliser des données de position produites par le capteur magnétique (110), les données de position étant corrigées avec des données mémorisées dans la table de correction spécifique au chariot (501, 502).

2. Système de transport (2) selon la revendication 1, dans lequel chaque dispositif d'entraînement (10, 20, 30, 40, 50, 60) comprend une unité de réception (44, 45) pour recevoir les données spécifique au chariot (48), l'unité de réception (44, 45) étant connectée au dispositif de commande (3) pour commander le système de transport (2).

3. Système de transport (2) selon la revendication 1 ou 2, dans lequel le dispositif suiveur de chariot (4, 306) comprend une pluralité d'unités de transmission (41, 42, 43), chaque chariot (70, 80, 90) étant doté d'une unité de transmission respective (41, 42, 43) desdites unités de transmission (41, 42, 43).

4. Système de transport (2) selon la revendication 2 ou 3, dans lequel chaque unité de transmission (41, 42, 43) est une étiquette RFID et l'unité de réception (44, 45) est un récepteur RFID.
